# EUROPÄISCHE PATENTSCHRIFT

(11) **EP 0 673 280 B1**
(45) Veröffentlichungstag und Bekanntmachung des Hinweises auf die Patenterteilung: **16.10.1996**
(21) Anmeldenummer: 94902698.3
(22) Anmeldetag: 07.12.1993
(51) Int. Cl.: B01D 46/24, F02M 35/024

(54) **LUFTFILTER**
FILTER
FILTRE

(30) Priorität: 10.12.1992 DE 4241586
(43) Veröffentlichungstag der Anmeldung: 27.09.1995
(73) Patentinhaber: FILTERWERK MANN & HUMMEL GMBH, D-71631 Ludwigsburg (DE)
(72) Erfinder: DUNGS, Günter, D-71696 Möglingen (DE); FISCHER, Peter, D-89073 Ulm (DE); MÖSSINGER, Klaus, D-74182 Obersulm (DE); THALLER, Günter, D-4030 Lienz (AT)
(74) Vertreter: Voth, Gerhard, Dipl.-Ing.
(86) Internationale Anmeldenummer: EP9303435
(87) Internationale Veröffentlichungsnummer: WO9413389

(56) Entgegenhaltungen:
- WO-A-91/13675
- DE-A- 2 626 008
- DE-U- 9 011 419
- FR-A- 2 391 761
- US-A- 4 304 580

## Beschreibung

Die Erfindung betrifft ein Filter insbesondere für die Ansaug Luft für Brennkraftmaschinen.

Aus der US-A- 47 20 292 ist ein Luftfilter mit folgenden Merkmalen bekannt: Ein Gehäuse mit einer axialen Auslaßöffnung und einem im wesentlichen offenen zweiten Ende, das durch eine entfernbare Abdeckung verschließbar ist. Am Umfang des Gehäuses ist eine Lufteinlaßöffnung angeordnet. Im Gehäuse befindet sich ein im wesentlichen zylindrisches Filterelement mit einem inneren Stützrohr, einem Filter mit einem äußeren Stützrohr, wobei das innere Filterelement in dem Gehäuse koaxial angeordnet ist. Die Abdichtung des Filterelements an dem Gehäuse erfolgt über eine ringförmige Endscheibe, die eine im wesentlichen zylindrische, radial einwärts gerichtete Oberfläche aufweist und über einen inneren Abschnitt des Auslaßteils geschoben wird.

Bekannterweise werden die Filtereinsätze von Luftfiltern nach einer bestimmten Betriebszeit ausgetauscht. Je nach Staubanfall kann die Standzeit eines Luftfilters wenige Tage (Baumaschinen) bis zu mehreren Monaten betragen. Der aus der oben genannten US-PS bekannte Filtereinsatz, sowie auch andere, üblicherweise verwendete Filtereinsätze bestehen aus einer Kombination von Werkstoffen, wobei insbesondere für die Stützrohre Stahlblech verwendet wird. Das eigentliche Filtermedium ist Papier oder ein Kunststoffvlies. Die Endscheiben bestehen aus Kunststoff (Weichelastomer). Eine Entsorgung solcher Luftfilter bzw. eine Auftrennung in die einzelnen Materialbestandteile ist mit hohem Aufwand verbunden und war deshalb bislang unwirtschaftlich.

Gemäß der in der Bundesrepublik Deutschland maßgebenden "Technischen Anleitung Abfall" erhält die Abfallvermeidung Vorrang vor der Abfallverwertung und Abfallbeseitigung. Voraussetzungen für den Verwertungsvorgang sind, daß die Verwertung technisch möglich ist, die Kosten der Verwertung zumutbar sind und für die gewonnenen Stoffe oder Energie ein Markt besteht oder geschaffen werden kann. Erst wenn diese Kriterien nicht erfüllt sind, sind die Abfälle ordnungsgemäß zu beseitigen.

Bei Luftfiltereinsätzen war bislang die Verwertung aufgrund der oben geschilderten Nachteile nicht möglich.

Ein weiterer Nachteil des bekannten Standes der Technik ist darin zu sehen, daß für den Luftfiltereinsatz ein relativ großes Gehäuse benötigt wird welches im Reinluftbereich unnötig viel Raum beansprucht.

Der Erfindung liegt deshalb die Aufgabe zugrunde, ein Filter zu schaffen, dessen Filtereinsätze in metallfreier Ausführung problemlos zu entsorgen sind und welches möglichst kompakt gebaut ist.

Diese Aufgabe wird durch den Hauptanspruch gelöst.

Die Erfindung hat gegenüber dem bisher bekannten Stand der Technik den Vorteil, daß die Filterteile, die nicht dem Verschleiß oder dem Verbrauch unterworfen sind, gehäusefest angeordnet sind und damit lediglich die Teile ausgetauscht werden, die dem Verbrauch unterliegen.

Dies bedeutet, daß allein ein Austausch des Filtermittels, also des Papiers bzw. des Vlieses mit den beiden Endscheiben erforderlich ist, während das Kunststoff-Mittelrohr oder andere Elemente wie Kunststoff-Stützrohre, Ventile oder ähnliches im Filtergehäuse verbleiben.

Ein weiterer Vorteil der Erfindung liegt darin, daß durch die Anordnung der Radialdichtung außerhalb des Filterbereichs eine wesentliche Reduzierung der Filterbaugröße erzielt wird. Es ist weiterhin bei der Erfindung von Vorteil, daß die Radialdichtung in radialer Richtung nicht durch den Filtereinsatz oder andere Begrenzungsmittel umfasst wird, sondern frei beweglich ist und dadurch eine größere Elastizität und damit auch eine höhere Sicherheit insbesondere bei Schwingungen oder Erschütterungen erzielt wird.

Nach einer Ausgestaltung der Erfindung stützt sich der Filtereinsatz mit einer geschlossenen Stirnseite an dem Deckel des Gehäuses ab. Diese Abstützung erfolgt über Noppen, die an der Innenwandung des Deckels anliegen. Hierbei wird eine kraftschlüssige Verbindung erzielt und der Filtereinsatz axial abgesichert.

Diese Absicherung ist gleichzeitig eine Befestigungsmethode die geeignet ist, Schwingungseinflüsse von außen abzudämpfen ohne daß eine Abstützung des Filtereinsatzes an seitlichen Wandflächen erforderlich wäre.

Gemäß einer Weiterbildung der Erfindung ist vorgesehen, innerhalb des Mittelrohres ein Sekundärelement anzuordnen. Dieses Sekundärelement hat die Eigenschaft, bei Austausch des Filtereinsatzes den Eintritt von abfallendem Schmutz, Staub oder ähnlichem in den Reinluftbereich des Filters zu verhindern und bei Beschädigung des Filterpapiers der Hauptpatrone den Motor vor Staubschäden zu schützen. Das Sekundärelement wird nicht bei jedem Austausch des Filtereinsatzes mit ausgewechselt sondern erst nach mehreren Wechselzyklen erneuert. Das Sekundärelement wird in das Mittelrohr hineingesteckt und über die vordere Endscheibe mit dem Mittelrohr lösbar verbunden. Damit dieses Sekundärelement in der Einbaulage fixiert ist, weist der Filtereinsatz, das heißt die Hauptpatrone, eine Anschlagfläche auf, welche dem Sekundärelement zugewandt ist und an welche das Sekundärelement an liegt. An der dem Deckel zugewandten Seite der Anschlagfläche ist diese mit Noppen versehen, die sich seinerseits an dem Deckel abstützt. Diese Art der Befestigung des Sekundärelements erweist sich als äußerst zuverlässig.

Der Filtereinsatz ist in einer bevorzugten Ausgestaltung der Erfindung ein in Sternfaltung geformtes Papier oder Vlies. Die Stirnflächen dieses Filtereinsatzes sind mit Endscheiben aus PUR-Schaum versehen. In diese Endscheiben ist das Dichtprofil integriert.

Zur Befestigung des Mittelrohres ist in vorteilhafter Weise an dem Ansatzrohr eine Nut vorgesehen. Diese Nut befindet sich an dessen Innenwand. Das Mittelrohr weist einen Wulst auf und wird in das Ansatzrohr eingepresst, dadurch kommt der Wulst in der Nut zur Anlage und stellt eine starre Verbindung des Mittelrohres mit dem Ansatzrohr und mit dem Gehäuse dar.

Insbesondere bei sehr staubreichem Betrieb ist es vorteilhaft, Grobstaub in geeigneter Weise vor dem eigentlichen Filter abzuscheiden. Hierzu ist der Rohlufteinlaß tangential ausgeführt und besitzt eine Ableitwand. Beides erzeugt eine Drallströmung der Rohluft. Diese Drallströmung wirkt nach Art eines Zyklons, so daß der Grobstaub nach außen geschleudert wird und im Bereich der Innenwandung des Gehäuses zu einem Staubaustragventil gelangt.

Gemäß einer weiteren vorteilhaften Ausgestaltung der Erfindung erfolgt die Verbindung über Gehäuse und Deckel mittels eines Rastelements. Ein solches ist beispielsweise ein Schnappverschluß der mit einem Biegescharnier an Deckel oder Gehäuse angeordnet ist und über einen Flansch des zu verbindenden Elements greift und dort einrastet. Der Deckel ist in bezug auf das Gehäuse in nahezu beliebig vielen Dreh-Stellungen befestigbar. Hierzu ist der Kontaktbereich zwischen Gehäuse und Deckel mit Rastelementen ausgerüstet. Diese verhindern ein unbeabsichtigtes und aufgrund von Erschütterungen oder Schwingungen verursacht es Verdrehen des Deckels auf dem Gehäuse während des Motorbetriebs.

Eine weitere vorteilhafte Ausgestaltung der Erfindung sieht vor, den Außenmantel des Filtergehäuses mit einem Vielkant zu versehen. Dieses Filtergehäuse wird auf ein Befestigungselement aufgesetzt, welches geeignet ist, in Verbindung mit dem Vielkant das Filtergehäuse in nahezu jeder beliebigen Einbaulage formschlüssig zu fixieren. Das Befestigungselement besteht im wesentlichen aus einer Grundplatte, die ein Spannband aufweist, welches über den Vielkant des Gehäuses greift. Weiterhin kann dieser Vielkant mit Rastvertiefungen ausgestattet sein, die sowohl in Umfangsrichtung als auch in Axialrichtung vorgesehen sind. Das Befestigungselement ist in diesem Fall mit Rastnocken vorgesehen, die in diese Vertiefungen eingreifen. Da die Rastvertiefung sowohl in Umfangsrichtung als auch in Axialrichtung angeordnet sind, kann eine formschlüssige Befestigung des Gehäuses in mehreren, in axialer Richtung unterschiedliche Stellungen erfolgen. Das Filter ist deshalb geeignet, sich an nahezu beliebig viele Einbauverhältnisse anzupassen und für jede beliebige Einbaulage eine optimale Filterwirkung sicherzustellen.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklich sein und vorteilhafte sowie für sich schutzfähige Ausführungen dastellen können, für die hier Schutz beansprucht wird. Ausführungsbeispiele der Erfindung sind in den Zeichnungen dargestellt und werden im folgenden näher erläutert. Die Zeichnungen zeigen:
- Fig. 1: ein Filter in Schnittdarstellung,
- Fig. 2: das Befestigungselement für den Filter,
- Fig. 3: eine Detaildarstellung des vorderen Bereichs des Filters,
- Fig. 4: das Detail A aus Fig. 1.

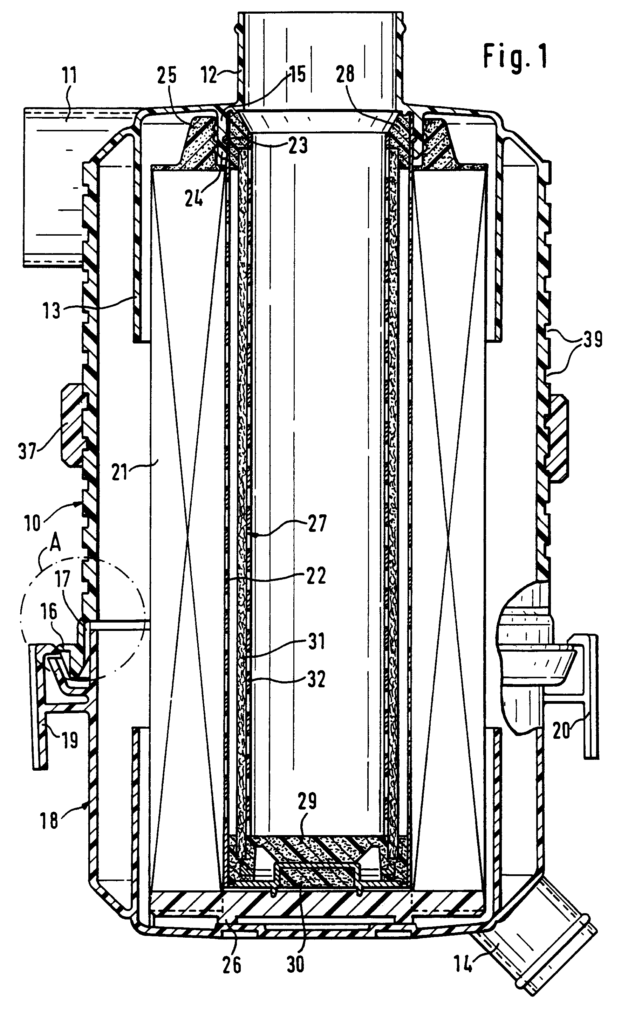

Das in Fig. 1 gezeigte Filter ist in zwei Halbschnitten dargestellt. Der linke Halbschnitt zeigt das Filter mit noch leicht geöffnetem Deckel während der rechte Halbschnitt das Filter mit geschlossenem Deckel zeigt. Das Filter besteht aus einem zylindrischen Gehäuse 10 mit einem Rohlufteinlaß 11 und einem Reinluftauslaß 12. Im Bereich des Rohlufteinlasses ist eine Ableitwandung 13 (Tauchrohr) vorgesehen. In Verbindung mit dem tangential in das Gehäuse 10 einführenden Rohlufteinlaß bildet sich eine Drallströmung der Rohluft. Diese bewirkt ein Abscheiden grober Staubpartikel, wobei diese grobe Staubpartikel an der Innenwandung des Filters nach unten gelangen und über eine Staubaustragöffnung 14, welche mit einem bekannten Staubaustragventil verschlossen ist, ins Freie geführt werden.

Eine zweckmäßige Ausgestaltung eines Filters ist darin zu sehen, daß das Mittelrohr gehäusefest angeordnet ist. Da dieses Mittelrohr nicht dem Verschleiß bzw. Verbrauch unterliegt, ist ein Austausch nicht erforderlich. In zweckmäßiger Weise ist dieses Mittelrohr, welches insbesondere aus Kunststoff besteht, kraftschlüssig mit dem Ansatzrohr des Gehäuses verbunden. Gemäß einer Ausgestaltung der Verbindung Mittelrohr - Ansatzrohr weist das Mittelrohr Dichtlippen auf, die im Verbindungsbereich angeordnet sind und eine zuverlässige Abdichtung gewährleisten. Das Sekundärelement wird im Gegensatz zu dem Filtereinsatz nicht gereinigt sondern, falls erforderlich, ausgetauscht. Ein Reinigen, z. B. durch Ausklopfen oder Auswaschen ist nicht zweckmäßig, da durch diesen Reinigungsvorgang das Sekundärelement beschädigt werden kann und damit seine Wirkung verliert. Es ist deshalb mit einem Lösegriff ausgestattet, der erkennen läßt, ob das Sekundärelement herausgenommen worden ist. Dieser Lösegriff weist eine Grifflasche auf, die aus Kunststoff besteht und mit einer Schwimmhaut mit dieser Endscheibe verbunden ist. Soll das Sekundärelement entfernt werden, so ist diese Schwimmhaut aufzureißen und die Grifflasche hochzuziehen. Mit dieser Grifflasche kann das Sekundärelement ausgebaut werden. Da die Grifflasche sich nunmehr in dem geöffneten Zustand befindet, ist sofort erkennbar, daß das Sekundärelement entfernt wurde. Gemäß einer weiteren Ausgestaltung ist das Sekundärelement mit einer radialen und/oder axialen Abdichtung versehen. Insbesondere die Axialabdichtwirkung wird durch einen Wulst am Ansatzrohr unterstützt.

Das Gehäuse 10 ist ferner mit einem Ansatzrohr 15, sowie mit einem umlaufenden Rastvorsprung 16 und einer zylinderförmigen Aufnahme 17 für einen Deckel 18, versehen. Der Deckel 18 ist topfförmig ausgebildet und weist wenigstens zwei Rastelemente 19, 20 auf. Diese Rastelemente sind schwenkbar mit dem Deckel über sogenannte Biegescharniere verbunden und werden mit dem Deckel gemeinsam in einem Arbeitsgang aus Kunststoff hergestellt. Sie greifen über den Rastvorsprung 16 des Gehäuses 10. Im linken Teilschnitt der Fig. 1 ist das Rastelement 19 in der Offenstellung gezeigt. Im rechten Teilschnitt bzw. in der ausgeschnittenen Ansicht ist das Rastelement 20 in geschlossener Stellung dargestellt.

An dem Ansatzrohr 15 des Gehäuses 10 ist ein Metall- oder Kunststoff-Mittelrohr 22 befestigt. Zur formschlüssigen Befestigung dieses Mittelrohrs ist dieses mit einem Wulst 23 versehen, welche in eine Nut 24 des Ansatzrohres 15 einrastet. Ein unbeabsichtigtes Entfernen des Mittelrohres ist damit nicht mehr möglich.

über das Mittelrohr 22 ist ein Filtereinsatz 21 geschoben. Dieser Filtereinsatz trägt an seiner oberen Stirnfläche eine Radialdichtung, welche mit der Endscheibe 40 des Filtereinsatzes eine Einheit bildet. Diese Radialdichtung besteht aus einem umlaufenden und außerhalb der Filterebene liegenden Wulst 25. Der Wulst 25 umfasst abdichtend das Ansatzrohr 15. Bei dieser Dichtungsart spielt eine axiale Lageänderung des Filtereinsatzes eine unerhebliche Rolle. Außerdem ist diese Art der Abdichtung auch bei Erschütterungen und Schwingungen äußerst zuverlässig.

Der Filtereinsatz 21 stützt sich an seinem rückwärtigen Ende über Noppen 26 an dem Deckel 18 ab. Diese Noppen, die auch als Deformationsrippen ausgestaltet sein können, dienen zur axialen Fixierung des Filtereinsatzes und zur Schwingungsdämpfung der in dem rückwärtigen Bereich lediglich auf dem Mittelrohr 22 freifliegend angeordneten Patrone. Innerhalb des Mittelrohrs 22 ist ein Sekundärelement 27 angeordnet. Dieses ist an seinem vorderen Ende mit einer PUR-Schaum-Stirnflächenabdichtung 28 versehen. Diese Stirnflächenabdichtung ist kraftschlüssig mit dem Ansatzrohr 15 verbunden. Das rückwärtige Ende des Sekundärelements 27 ist mit einer PUR-Schaum-Stirnseitenabichtung 29 versehen. In diese Endscheibe 29 ist ein Kunststoffgriff integriert der dazu dient, das Sekundärelement nötigenfalls manuell zu entfernen. Das Sekundärelement besteht zweckmäßigerweise aus einem Vlies 31, welches auf ein Stützrohr 32 geschoben ist. Die axiale Kraft zur Abdichtung des Sekundärelements an dem Reinluftausgang wird über den Deckel 18 und die Noppen 26 des Filtereinsatzes 21 auf die Stirnseitenabdichtung 29 aufgebracht.

Da das Sekundärelement 27 vollständig von dem Mittelrohr 22 umschlossen ist, besteht nicht die Gefahr, daß beim Austausch des Filtereinsatzes das Sekundärelement versehentlich herausgenommen wird oder herausfällt.

Beim Zusammenbau des gesamten Filters wird zunächst das Sekundärelement eingesteckt, anschließend der Filtereinsatz 21 darübergeschoben und der Deckel 18 aufgesetzt. Durch die Abstützung des Sekundärelements an dem Filtereinsatz 21, am rückwärtigen Ende, und gleichzeitig die Abstützung des Filtereinsatzes 21 an dem Deckel 18 werden durch das Aufschieben des Deckels beide Elemente in ihre lagerichtige Position gebracht. Dies bedeutet, daß eine Falschmontage der beiden Elemente nicht möglich ist. Die Endlage dieser Elemente wird durch Verschließen des Deckels 18 an der Aufnahme 17 erreicht.

Das metallfreie Sekundärelement ist problemlos zu entsorgen. Vlies, PUR-Schaum-Endscheiben, Kunststoff-Mittelrohr und - Griff können beispielsweise thermisch entsorgt werden.

Weil der Filtereinsatz 21 an beiden Stirnseiten eine Stirnseitenabdichtung aus PUR-Schaum aufweist ist es ohne weiteres möglich, diesen Filtereinsatz auch auszuklopfen und von der Schmutzschicht zu befreien. Die elastischen Endscheiben werden dabei nicht beschädigt, wie dies beispielsweise bei Blechendscheiben der Fall wäre.

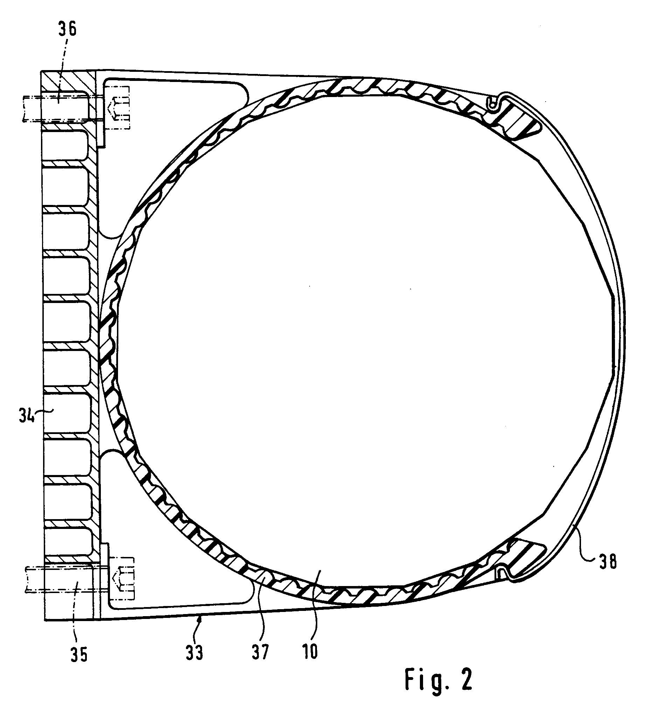

Die Fig. 2 zeigt ein Befestigungselement für Filter. Von dem Filter ist das Gehäuse 10 nur schematisch angedeutet. Das Befestigungselement 33 besteht aus einer Grundplatte 34, die über Schraubverbindungen 35, 36 an eine hier nicht näher dargestellte Außenstruktur eines Motors oder eines Fahrzeuges befestigt werden kann. An der Grundplatte 34 befinden sich ein Aufnahmeteil 37. Dieses Aufnahmeteil ist in Form eines kreisausschnittförmigen Bandes gestaltet, welches etwa 40 mm breit ist.

Das Filter 10 wird von diesem Band bzw. Aufnahmeteil 37 umschlossen. Ein Federstahlbügel 38 ist an Einhängeösen des Aufnahmeteils 37 eingehängt und verschließt unter Vorspannung die Filteraufnahme. Das Federstahlband ist zweckmäßigerweise auf der einen Seite lösbar befestigt. Auf der anderen Seite ist es in eine Öse eingehängt.

Das Aufnahmeteil 37 besitzt über der gesamten Innenfläche Vertiefungen. Der Außenmantel des Filters 10 weist über seinen gesamten Umfang einen Mehrkant auf. Der Mehrkant ist geeignet, in den Vertiefungen einzurasten und damit das Filter gegen Verdrehen zu sichern, andererseits aber eine Befestigung des Filters in nahezu jeder beliebigen Stellung zuzulassen.

Das gesamte Befestigungselement 33 ist zweckmäßigerweise als Kunststoffspritzgußteil ausgestaltet. Eine Befestigung des Filters über ein solches Kunststoffteil hat den Vorteil, daß zumindest in Teilbereichen Schwingungen, die von der Verbrennungskraftmaschine erzeugt werden, innerhalb des Materialgefüges abgedämpft werden und damit stark vermindert auf das Filter wirken.

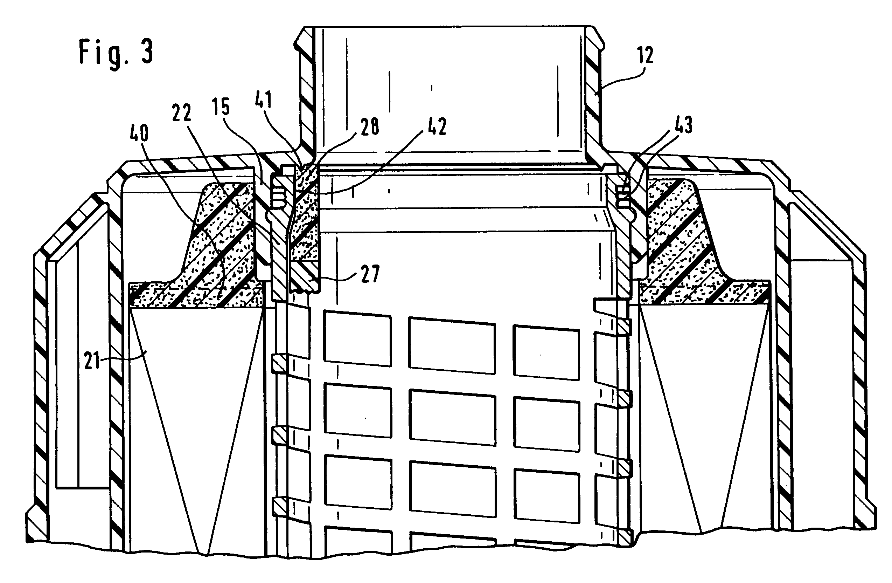

Die Figur 3 zeigt eine Detaildarstellung des vorderen Bereichs des Filters. Am Ansatzrohr 15 ist ein umlaufender Wulst 41 vorgesehen. Dieser dient zur Unterstützung der axialen Abdichtwirkung in Verbindung mit der Stirnseitenabdichtung 28 des Sekundärelements 27, welches hier nur andeutungsweise gezeigt ist. Zusätzlich besteht im Bereich 42 zwischen der Stirnseitenabdichtung 28 und dem Mittelrohr 22 eine Radialdichtung. Das Mittelrohr 22 ist in dieser Figur als Kunststoffelement dargestellt. Dieses wird in das Ansatzrohr 15 formschlüssig eingesteckt. Zur Unterstützung der Dichtungwirkung zwischen Ansatzrohr 15 und dem Mittelrohr 22 sind an dem Mittelrohr 22 Dichtlippen 43 angeordnet. Der Filtereinsatz 21 mit seiner PUR-Endscheibe 40 wird über die Außenwand des Ansatzrohres 15 abgedichtet.

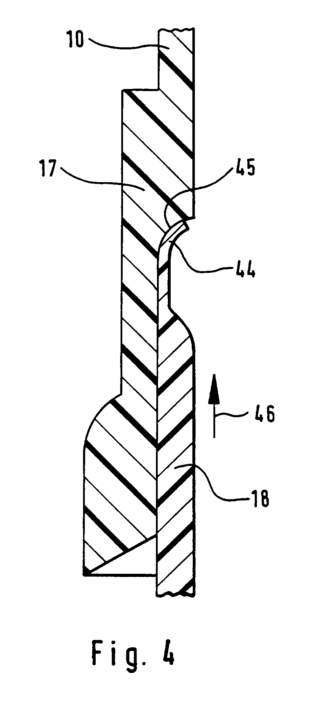

In Figur 4 ist das Detail A aus Figur 1 gezeigt und stellt die Abdichtung zwischen Deckel 18 und Aufnahme 17 dar. Der Deckel 18 ist mit einer Dichtlippe 44 ausgestattet. An der Aufnahme 17 des Gehäuses 10 befindet sich eine nach innen gezogene Dichtfläche 45. Sobald der Deckel gemäß dem Pfeil 46 in die Endlage geschoben wird, schmiegt sich die Dichlippe 44 an der Dichtfläche 45 an und bildet damit eine zuverlässige Abdichtung zwischen den beiden Gehäuseteilen.

## Patentansprüche

1. Luftfilter, insbesondere für die Reinigung von Verbrennungsluft für Brennkraftmaschinen, mit einem im wesentlichen zylindrischen Gehäuse (10), welches einen Rohlufteinlaß (11) und einen Reinluftauslaß (12) aufweist, wobei der Reinluftauslaß im wesentlichen konzentrisch an eine der Stirnseiten des zylinderförmigen Gehäuses angeordnet ist und der Rohlufteinlaß im wesentlichen tangential an der Mantelfläche des Gehäuses angeordnet ist, wobei am Reinluftauslaß ein in das Innere des Filtergehäuses sich erstreckende Ansatzrohr (15) konzentrisch zu dem Reinluftauslaß vorgesehen ist und wobei an der Innenwand des Ansatzrohres ein sich in das Gehäuse erstreckendes Mittelrohr (22) befestigt ist und wobei über das Mittelrohr ein im wesentlichen metallfreier Filtereinsatz (21) geschoben ist, dessen dem Ansatzrohr zugewandten Stirnseite mit einem radial frei beweglichen Dichtwulst (25) versehen ist, wobei der Dichtwulst auf der Oberfläche des Ansatzrohres abdichtend anliegt und eine Radialdichtung bildet und wobei die gegenüberliegende Stirnseite verschlossen ist.

2. Filter nach Anspruch 1 dadurch gekennzeichnet, daß das Gehäuse an der dem Reinluftauslaß gegenüberliegenden Seite mit einem Deckel (18) versehen ist und der Filtereinsatz mit seiner geschlossenen Stirnseite, insbesondere über Noppen, an dem Deckel anliegt und sich kraftschlüssig abstützt.

3. Filter nach einem der vorherigen Ansprüche dadurch gekennzeichnet, daß innerhalb des Mittelrohres ein Sekundärelement (27) angeordnet ist, dessen dem Reinluftauslaß gegenüberliegenden Stirnseite geschlossen ist und mit dem Mittelrohr lösbar verbunden ist.

4. Filter nach einem der vorherigen Ansprüche dadurch gekennzeichnet, daß der Filtereinsatz aus einem in Sternfaltung gefalteten Papier oder Flies besteht und die Endscheiben sowie der Dichtwulst aus PUR-Schaum bestehen.

5. Filter nach einem der vorherigen Ansprüche, wobei das Ansatzrohr an seiner Innenwandung mit einer umlaufenden Nut (24) versehen ist und das Mittelrohr eine Sicke aufweist und diese über die Nut mit dem Ansatzrohr formschlüssig verbunden ist.

6. Filter nach einem der vorherigen Ansprüche mit einem an der Innenwand des Gehäuses im Bereich des tangentialen Rohlufteinlasses angeordneten Ableitwandung zur Erzeugung einer Drallströmung.

7. Filter nach einem der vorherigen Ansprüche mit einem Rastelement (19), welches zur formschlüssigen Verbindung von Gehäuse und Deckel geeignet ist und mit dem Deckel oder dem Gehäuse über ein Filmscharnier oder ein Biegescharnier verbunden ist.

8. Filter nach einem der vorherigen Ansprüche mit einer im Deckel angeordneten Staubaustragöffnung (14), wobei Deckel und Gehäuse in dem Bereich ihres Kontaktbereichs mit Rastvertiefung und Nocken ausgerüstet sind, so daß der Deckel in nahezu jeder beliebigen relativ zu dem Gehäuse gedrehten Lage formschlüssig befestigbar ist.

9. Filter nach einem der vorherigen Ansprüche mit einem auf dem Filtergehäuse angeordneten Mehrkant, wobei ein Befestigungselement (33) vorgesehen ist, das im wesentlichen aus einem, auf einer Grundplatte (34) befestigten und geteilten Band (37) besteht, wobei das Band über den Mehrkant des Gehäuses greift und ein Federstahlband vorgesehen ist, welches ein Spannen des Bandes bewirkt.

10. Filter nach einem der vorherigen Ansprüche mit auf dem Vielkant des Gehäuses angeordneten Rastvertiefungen, die sowohl in Umfangsrichtung als auch in Axialrichtung vorgesehen sind und eine formschlüssige Befestigung des Gehäuses auf dem Befestigungselement in axialer Richtung unterschiedliche Stellungen ermöglichen.

11. Filter nach Anspruch 1, dadurch gekennzeichnet, daß das Mittelrohr aus Kunststoff besteht und kraftschlüssig mit dem Gehäuse verbunden ist.

12. Filter nach Anspruch 11, dadurch gekennzeichnet, daß das Mittelrohr im Verbindungsbereich mit dem Ansatzrohr wenigstens eine umlaufende Dichtlippe (43) aufweist.

13. Filter nach einem der vorherigen Ansprüche, dadurch gekennzeichnet, daß das Sekundärelement (27) mit einem Lösegriff versehen ist, welcher wenigstens eine Grifflasche aufweist, die zur Demontage des Sekundärelements anhebbar ist.

14. Filter nach einem der vorherigen Ansprüche, dadurch gekennzeichnet, daß das Sekundärelement an seiner dem Ansatzrohr zugewandten Stirnseite mit einer Radial- und/oder Axialdichtung versehen ist.

15. Filter nach Anspruch 14, dadurch gekennzeichnet, daß das Ansatzrohr im Bereich der Axialdichtung des Sekundärelements einen umlaufenden Wulst aufweist (41).

## Claims

1. Air filter, more especially for the cleaning of combustion air for internal combustion engines, including a substantially cylindrical housing (10), which has an unfiltered air inlet (11) and a filtered air outlet (12), the filtered air outlet being disposed substantially concentrically on one of the end faces of the cylindrical housing, and the unfiltered air inlet being disposed substantially tangentially on the surface of the housing, an attaching tube (15) extending into the interior of the filter housing and being provided concentrically relative to the filtered air outlet, and a central tube (22) extending into the housing and being mounted on the internal wall of the attaching tube, and a substantially metal-free filter insert (21) being slipped over the central tube, the end face of said insert facing the attaching tube being provided with a radially freely displaceable sealing bead (25), the sealing bead sealingly abutting against the surface of the attaching tube and forming a radial seal, and the oppositely situated end face being closed.

2. Filter according to claim 1, characterised in that the housing is provided with a cover (18) on the side situated opposite the filtered air outlet, and the filter insert abuts against the cover with its closed end face, more especially via knubs, and is supported in a force-locking manner.

3. Filter according to one of the preceding claims, characterised in that a secondary element (27) is disposed internally of the central tube, the end face of said element situated opposite the filtered air outlet being closed and detachably connected to the central tube.

4. Filter according to one of the preceding claims, characterised in that the filter insert is formed from a paper or non-woven fabric which is folded in the form of a star, and the end discs and the sealing bead are formed from PUR foam.

5. Filter according to one of the preceding claims, wherein the attaching tube is provided with a circumferential groove (24) on its internal wall, and the central tube has a channel, and said channel is connected to the attaching tube in a form-locking manner via the groove.

6. Filter according to one of the preceding claims, including a deflection panel, which is disposed on the internal wall of the housing in the region of the tangential unfiltered air inlet, to produce a torsional flow.

7. Filter according to one of the preceding claims, including a locking element (19), which is suitable for the form-locking connection of the housing and cover and is connected to the cover or the housing via a film hinge or a flexible hinge.

8. Filter according to one of the preceding claims, including a dust discharge aperture (14), which is disposed in the cover, the cover and housing being provided with a locking recess and cams in the region where they are in contact with each other, so that the cover is mountable in a form-locking manner in almost any desirable position rotated relative to the housing.

9. Filter according to one of the preceding claims, including a polygon disposed on the filter housing, a securing element (33) being provided, which substantially comprises a split band (37) mounted on a base plate (34), the band overlapping the polygon of the housing, and a spring steel strip being provided, which effects a tensioning of the band.

10. Filter according to one of the preceding claims, including locking recesses disposed on the polygon of the housing, said recesses being provided both in the circumferential direction and in the axial direction and permitting the housing to be mounted in a form-locking manner on the securing element in positions which vary in the axial direction.

11. Filter according to claim 1, characterised in that the central tube is formed from plastics material and connected to the housing in a force-locking manner.

12. Filter according to claim 11, characterised in that the central tube has at least one circumferential sealing lip (43) in the connection region with the attaching tube.

13. Filter according to one of the preceding claims, characterised in that the secondary element (27) is provided with a detachable grip, which has at least one gripping tab, which is raisable for the dismounting of the secondary element.

14. Filter according to one of the preceding claims, characterised in that the secondary element is provided with a radial and/or axial seal on its end face facing the attaching tube.

15. Filter according to claim 14, characterised in that the attaching tube has a circumferential bead (41) in the region of the axial seal of the secondary element.

## Revendications

1. Filtre à air, destiné notamment à purifier l'air de l'alimentation de moteurs à combustion interne, comprenant un boîtier essentiellement cylindrique (10) présentant une entrée d'air brut (11) et une sortie d'air purifié (12), caractérisé en ce que :
- la sortie d'air purifié est essentiellement concentrique et montée sur une des faces frontales du boîtier cylindrique,
- l'entrée d'air brute est essentiellement tangentielle par rapport à la paroi enveloppe du boîtier,
- à la sortie d'air purifié, est prévu, à l'intérieur du boîtier de filtre concentriquement à elle même, un embout tubulaire (15), et sur la paroi interne de l'embout est fixé un tube médian (22) s'étendant à l'intérieur du boîtier,
- sur le tube médian est emmanché un élément filtrant (21) essentiellement non métallique et dont la face frontale située vers l'embout (15) est équipée d'un bourrelet d'étanchéité (25) qui se déplace librement radialement et qui est en appui étanche sur la surface de l'embout, créant aussi une étanchéité radiale obturant la face frontale opposée.

2. Filtre selon la revendication 1,
caractérisé en ce que
le côté du boîtier situé à l'opposé de la sortie d'air purifié est muni d'un couvercle (18), l'élément filtrant étant en contact par sa face fermée, notamment par l'intermédiaire de tétons, avec le couvercle sur lequel il s'appuie par une liaison par la force.

3. Filtre selon une des revendications précédentes, caractérisé en ce que
à l'intérieur du tube médian, est disposé un élément secondaire (27), fermé sur sa face frontale opposée à la sortie d'air purifié et relié de manière amovible au tube médian.

4. Filtre selon une des revendications précédentes, caractérisé en ce que
l'élément filtrant est fait de papier ou de non tissé plié en étoile, les flasques terminaux et également le bourrelet d'étanchéité étant en mousse de polyuréthanne.

5. Filtre selon une des revendications précédentes, caractérisé en ce que
l'embout tubulaire présente sur sa paroi interne une gorge périphérique (24) tandis que le tube médian porte un sertissage qui assure une liaison par la forme de l'embout et de la gorge.

6. Filtre selon une des revendications précédentes, caractérisé en ce qu'
il comporte sur la paroi interne du boîtier, au niveau de l'entrée tangentielle d'air pur, une cloison déflectrice destinée à produire un écoulement hélicoïdal.

7. Filtre selon une des revendications précédentes, caractérisé en ce qu'
il comporte un élément d'arrêt (19) par combinaison de formes du boîtier et du couvercle, cet élément étant relié au couvercle ou au boîtier par une charnière à film ou une charnière flexible.

8. Filtre selon une des revendications précédentes, caractérisé en ce qu'
il comporte, dans le couvercle, une ouverture d'évacuation de poussière (14), le couvercle et le boîtier étant équipés, au niveau de leur zone de contact, d'une gorge d'arrêt et de cames de manière que le couvercle puisse être fixé au boîtier par une liaison par la forme dans presque toutes les positions relatives, en rotation, du boîtier et du couvercle.

9. Filtre selon une des revendications précédentes, caractérisé en ce que
le boîtier de filtre est polygonal et qu'il lui est associé un élément de fixation (33) constitué essentiellement d'un collet (37) ouvert et fixé à une embase (34), le collet venant en prise dans le polygone du boîtier et un collet (38) en acier à ressort, qui vient serré le boîtier, est prévu.

10. Filtre selon une des revendications précédentes, caractérisé en ce qu'
il comporte, disposées sur le polygone du boîtier, des cavités d'arrêt aussi bien en direction périphérique qu'en direction axiale et permettant ainsi de fixer, par une liaison par la forme, le boîtier sur l'élément de fixation, dans des positions différentes selon la direction axiale.

11. Filtre selon la revendication 1, caractérisé en ce que
le tube médian est en matière plastique et est relié au boîtier par une liaison par la force.

12. Filtre selon la revendication 11, caractérisé en ce que
le tube médian présente, au niveau de sa liaison à l'embout tubulaire au moins une lèvre périphérique d'étanchéité (43).

13. Filtre selon une des revendications précédentes, caractérisé en ce que
l'élément secondaire (27) est équipé d'un organe de libération comprenant au moins une languette d'accrochage que l'on peut soulever pour démonter l'élément secondaire.

14. Filtre selon une des revendications précédentes, caractérisé en ce que
l'élément secondaire porte sur sa face frontale située près de l'embout tubulaire, un joint d'étanchéité radiale et/ou axiale.

15. Filtre selon la revendication 14, caractérisé en ce que
l'embout tubulaire présente un bourrelet périphérique (41) au niveau du joint d'étanchéité axiale de l'élément secondaire.
